(19) Europäisches Patentamt
European Patent Office
Office européen des brevets

(11) EP 0 614 955 B1

(12) **EUROPEAN PATENT SPECIFICATION**

(45) Date of publication and mention
of the grant of the patent:
**06.05.1998 Bulletin 1998/19**

(51) Int Cl.6: **C09D 125/14**, C09D 5/04,
C09D 5/02

(21) Application number: **94103257.5**

(22) Date of filing: **04.03.1994**

(54) **Stain-resistant latex paint**

Schmutzabweisender Latex-Anstrichstoff

Peinture latex résistante aux taches

(84) Designated Contracting States:
**BE DE FR GB NL**

(30) Priority: **08.03.1993 US 27717**

(43) Date of publication of application:
**14.09.1994 Bulletin 1994/37**

(73) Proprietor: **MINNESOTA MINING AND
MANUFACTURING COMPANY
St. Paul, Minnesota 55133-3427 (US)**

(72) Inventors:
• **Hauser, Edward Russell,
c/o Minnesota Mining and
St. Paul, Minnesota 55133-3427 (US)**
• **Kistner, John Frederick,
c/o Minnesota Mining and
St. Paul, Minnesota 55133-3427 (US)**

(74) Representative: **VOSSIUS & PARTNER
Siebertstrasse 4
81675 München (DE)**

(56) References cited:
**US-A- 4 960 463**

## Description

This invention relates to stain-resistant latex paint. In another aspect it relates to methods of preparing said paint. Latex paints are generally emulsions of polymer in water with dispersed pigment and other additives. Latex paints are often preferred over solvent-based paints because of their improved safety, lower toxicity, and lower volatile-organic contents. However, latex paints, particularly flat latex-paints, generally have poor stain-resistance, that is, they absorb stains such that the stains cannot be easily removed by washing.

Paints can be manufactured to have a final film surface that is glossy, semi-glossy, or flat. The smoother the paint surface is, the glossier or shinier it appears. If the paint surface is made irregular, reflected light becomes diffuse, and the paint does not have a shiny appearance; such paints are said to exhibit a degree of flatness.

Flatting agents, such as silica, are often used to cause the paint-film surface to be irregular. For a discussion of the use of silica flatting agents see, e.g., "Natural Silicas in Coatings," by Walter J. Polestak and Thomas D. Thompson, Journal of Coatings Technology, Volume 58, No. 735, April 1986, page 31-36 and "Amorphous Precipitated Silica Flatting Agents for Coatings," by H. S. Ritter and H. J. Golden, Journal of Coatings Technology, Volume 49, No. 628, May 1977, page 39-47.

Flat latex paints generally stain badly, and are difficult to clean because of their highly porous nature, and because of their rough surface texture. Surface dirt, such as handprints, smudges, dust and other particulate matter, may become entrapped in the bumpy, rough texture of the paint surface. Penetrating type stains, such as ink, soft drinks, wine, and other colored liquids, have easy access into the interior of a flat paint film through numerous pores and microchannels.

Certain acrylic emulsion polymers are useful in alkali- or detergent-resistant inks or coatings. See, for example, product bulletins PSN 0-100-10/82 and PSN 0-602-9/86 of S.C. Johnson & Sons, Inc., for Joncryl™ 537 acrylic emulsions.

Acrylic emulsions are also disclosed in U.S. Pat. No. 4,960,463 (Brown). Brown discloses floor-polishing compositions comprising an alkoxylated amine surfactant and a polymer. The polymer can be a styrene-acrylic copolymer and the polymer may be dispersed in water.

U.S. Pat. No. 4,230,609 (Bunoway et al.) discloses water-reducible compositions comprising a polymer whose polymerized monomer units are obtained from 64.5 to 84.5 wt % of monomers selected from a class which includes styrene and methylstyrene and from 15 to 35 wt % of monomers selected from at least one acrylate and at least one vinyl ether or diene.

Briefly, in one aspect, the present invention provides a latex paint comprising:

(A) polymer having a Tg between 21°C and 95°C, whose interpolymerized units comprise at least 40 mole percent of units derived from styrene, methylstyrene, or both, and at least 10 mole percent of units derived from one or more acrylate monomers, e.g. 2-ethylhexyl acrylate, methacrylate monomers, e.g. methyl methacrylate, or acrylonitrile, or combinations thereof;
(B) hiding pigment, such as titanium dioxide; and
(C) non-cellulosic thickener, such as a polyurethane associative thickener, wherein said paint has a pigment volume concentration of at least 20%.

In another aspect, this invention provides an improved method of preparing latex paint, wherein the improvement comprises using an emulsion of a polymer having a Tg between 21°C and 95°C, whose interpolymerized units comprise at least 40 mole percent of units derived from styrene, methylstyrene, or both, and at least 10 mole percent of units derived from one or more acrylate monomers, e.g. 2-ethylhexyl acrylate, methacrylate monomers, e.g. methyl methacrylate, or acrylonitrile, or combinations thereof. Preferred methods comprise adding a portion of said polymer emulsion to the grind.

Furthermore, the invention provides an article wherein a portion of at least one surface of said article is coated with a stain-resistant latex paint of this invention as described above.

A class of the paints of this invention are flat paints which further comprise a flatting agent, such as silica. While there appears to be no industry standards for when a paint is flat, generally a paint having an 85° gloss of between 10 and 20 is considered egg shell, and a paint having an 85° gloss of less than or equal to 10 is generally considered flat.

The latex-paints of this invention can produce films which exhibit outstanding stain-resistance and washability to both surface and penetrating types of stains. Performance which is superior even to commercial semi-gloss and gloss paints can be achieved using the paints of this invention. Even the flat paints of this invention can give films with stain-resistance superior to commercial semi-gloss and gloss paints.

Polymers useful as component (A), the binding resin, in the practice of this invention are the copolymerization products of a mixture of comonomers which comprises, consists essentially of, or consists of: at least 40 mole % of monomers selected from styrene, α-methylstyrene, or both; and at least 10 mole % of one or more monomers selected from acrylonitrile, acrylates, and methacrylates. Said acrylates and methacrylates preferably contain from 4 to 16 carbon atoms, e.g., 2-ethylhexyl acrylate and methyl methacrylate. Said monomers are used in proportion such that the final polymer has a Tg between 21°C and 95°C. The polymers preferably have a weight-average molecular weight of at least 100,000.

The polymers useful as component (A) comprise preferably from 50 to 70 mole % of units derived from styrene, methyl styrene, or both; from 10 to 30 mole % of units derived from 2-ethylhexyl acrylate; and from 10 to 30 mole % of units derived from methyl methacrylate, acrylonitrile, or both.

Films prepared from the paints of this invention generally have increased stain-resistance compared to commercially available paints. This increase in stain-resistance is generally greatest when > the polymer component (A) comprises interpolymerized units derived from 2-ethylhexyl acrylate. Therefore, while polymers without 2-ethylhexyl acrylate may be utilized in the paints of this invention, preferred polymers comprise units derived from 2-ethylhexyl acrylate.

An example of a preferred polymer useful as component (A) is a copolymer whose interpolymerized units are derived from about 49 mole % styrene, 11 mole % a-methylstyrene, 22 mole % 2-ethylhexyl acrylate, and 18 mole % methyl methacrylate. This polymer has a Tg of approximately 45°C. Paints prepared according to the teachings of this invention, using this polymer as the binding resin, exhibit excellent stain-resistance. This polymer is available from ICI Americas, Inc., as Neocryl™ XA-6037 polymer emulsion.

Another preferred polymer comprises interpolymerized units derived from approximately 51 mole % styrene, 12 mole % α-methyl styrene, 17 mole % 2-ethylhexyl acrylate, and 19 mole % methyl methacrylate. This polymer has a Tg of 44°C and also can be used in the formulas of this invention to prepare paints which exhibit outstanding stain-resistance. This polymer is sold as Joncryl™ 537 polymer emulsion by S.C. Johnson & Sons, Inc.

Another preferred polymer is a terpolymer sold by B.F. Goodrich Co. as Carboset™ XPD-1468 polymer emulsion which comprises interpolymerized units derived from about 54 mole % styrene, 23 mole % 2-ethylhexyl acrylate, and 23 mole % acrylonitrile, has a Tg of 44°C, and also produces paints with outstanding stain-resistance.

The latex paint of this invention contains a hiding pigment which generally has a refractive index of at least about 1.8. Typical white opacifying hiding pigments include rutile and anatase titanium dioxides, lithophone, zinc sulfide, lead titanate, antimony oxide, zirconium oxide, barium sulfide, white lead, zinc oxide, leaded zinc oxide, mixtures of the same, and like pigments. A preferred white inorganic hiding pigment is rutile titanium dioxide having an average particle size between about 0.2 to 0.4 microns. Titanium yellow and like pigments having a high refractive index can be utilized as hiding pigments as well as imparting tints to the paint. Although most hiding pigments are white, all pigments having an index of refraction above about 1.8 should be considered as hiding pigments for the purpose of this invention regardless of their tinting (tinctorial) effect on the resulting paint film.

Most commercial latex paints contain one or more thickeners to obtain the rheological properties needed for proper spreading and application. Cellulosic types of thickener are often used in commercial latex paints because these types of thickeners are easy to use, provide the necessary rheological properties, and are inexpensive. Cellulosic thickeners however, are not used in paints of this invention because of their tendency to decrease the stain-resistance of the resulting paint. At pigment volume concentrations (PVC) of less than about 47%, the presence of cellulosic thickener in the paints of this invention can contribute to a moderate increase in staining. At higher PVC, or in the presence of clay extender-pigments, the presence of cellulosic thickener can contribute to a significant increase in staining. Therefore, the paints of this invention are substantially free of cellulosic thickener.

The preferred thickeners for the paints of this invention are associative-type thickeners.

US-Patent No. 4,079,028 relates to the incorporation of a new class of nonionic, low molecular weight polyurethanes characterized by at least three hydrophobic groups interconnected by hydrophilic polyether groups useful for thickening latex and aqueous systems. Associative-type thickeners are thought to function primarily by forming polar and hydrogen bonds between themselves, pigment particles, and latex particles. This association between the various constituents of the paint thickens the paint. Cellulosic thickeners on the other hand are believed to function primarily by entanglement of their long polymeric chains. Polyurethane associative thickeners, such as QR-708 Rheology Modifier available from Rohm & Haas Co., are a particularly preferred associative-type thickener.

Latex-paint films are formed by coalescence of the binding resin to form a binding matrix at the ambient paint application temperature to generate a hard, tack-free film. Coalescing solvents aid the coalescence of the film-forming binder by lowering the film-forming temperature. The latex paints of this invention preferably contain a coalescing solvent. Particularly desirable coalescing solvents are 2-phenoxyethanol, diethylene glycol butyl ether, dibutyl phthalate, diethylene glycol monobutyl ether acetate or monoethyl ether acetate, and 2,2,4-trimethyl-1,1,3-pentanediol monoisobutyrate. Coalescing solvent is preferably utilized at a level between about 12 to 60 grams and most preferably at about 40 grams of coalescing solvent per liter of latex paint. Preferably the coalescing solvent is added at the levels of about 20 to 30 weight % based on weight of polymer solids of the paint.

The flat paints of this invention preferably contain a flatting agent. As the PVC of a paint increases above the critical pigment volume concentration (CPVC), the paint changes from a semi-gloss paint to a flat paint. See, for example Guy E. Weismantel, Paint Handbook, pp 1-21 to 1-22, McGraw-Hill (1981). A flat paint can also be produced by adding a flatting agent. For the purposes of this specification, a flatting agent is a material which will reduce the gloss of a paint film. This later approach allows the production of a better paint film. Preferable flatting agents are silicas of various types, for example, Novacite™ Silica. Novacite™ Silica is a platey-type of silica which has low water demand, and which helps control staining. The use of this silica effectively flats the paint and also produces a balanced gloss.

Paints can be manufactured to have a desired degree of gloss or shininess. Gloss is defined by ASTM test method D523. In this test, light reflected at a given angle using specified optics is compared to the light reflected from a specified type of glass. This test is defined for 20°, 60°, and 85° angles measured from the vertical. For the purposes of this specification, paints with 60° and 85° glosses of approximately equal value are generally judged to be more pleasing to the eye. For the purposes of this specification this is a "balanced gloss."

Preferably, the paints of this invention have a PVC below the CPVC. More preferably the paint of this invention has a pigment volume concentration of less than 55% and greater than 45%. Particularly preferred paints are made below 54% PVC. A paint made at 54% PVC exhibited noticeably more staining than a 52% PVC paint which exhibited about the same stain-resistance as a 47% PVC paint.

The paints of this invention may further comprise conventional materials used in paints such as plasticizer, anti-foam agent, pigment extender, pH adjuster, tinting color, and biocide. Such typical ingredients are listed, for example, in "Technology of Paints, Varnishes and Lacquers", C. R. Martens editor, R. E. Krieger Publishing Co. (1974), p 515.

Paints are often formulated with "functional extenders". The most common functional extenders for interior flat-paints are clays. These materials have a number of properties that make them desirable. First, because calcined clays have a large internal surface area, they contribute to "dry hide" in the paints. Unfortunately, this surface area is also available to trap stains. Dry hide is an increase in opacity or hiding power which happens as a paint dries. Second, some clays are useful in controlling low-shear viscosity. Third, clays are also inexpensive.

Because of their tendency to absorb stains, calcined clays are preferably not used in the paints of this invention, or are used only in the small amounts required for rheology control (generally less than about 20 g per liter). The preferred extenders in the paints of this invention are calcium carbonates. The most preferred extender in the paints of this invention is a particular grade of calcium carbonates, called Opacimite. Opacimite is not a clay, and does not contribute to staining. Because of its size distribution, Opacimite helps space $TiO_2$ optimally for hide. See, K.A. Haagenson, "The effect of extender particle size on the hiding properties of an interior latex flat paint." American Paint & Coatings Journal, April 4, 1988 p 89-94. Other brands of $CaCO_3$ would also be suitable, preferably those with particle size of 1.0 to 1.2 microns.

The paints of this invention can be prepared utilizing conventional techniques. For example, some of the paint ingredients are generally blended together under high shear ("grinding") to form a mixture commonly referred to as "the grind" by paint formulators. The consistency of this mixture is similar to mud, which is desirable in order to efficiently disperse it with a high shear stirrer. During the preparation of the grind, high shear energy is used to break apart agglomerated pigment particles.

The ingredients not included in the grind are generally referred to as the "letdown". The letdown ingredients are usually much less viscous than the grind, and are usually used to dilute the grind material to obtain a final paint with the proper consistency. The final mixing of the grind with the letdown is generally carried out with normal paddle mixing (not at high shear).

Most polymer latexes are not shear stable, and therefore are not used as a component of the grind. Incorporation of shear unstable latexes in the grind could result in coagulation of the latex, yielding a "lumpy" paint with no, or little film-forming capability. Consequently, paints are generally prepared by adding the latex polymer only in the letdown.

However, the preferred paints of this invention contain latexes that generally are shear stable. Therefore, the paints of this invention can be prepared by incorporating some or all of the latex into the grind. Better stain-resistance was obtained when a portion of the polymer latex was used in the grind during the preparation of the paints of this invention. However, paints of this invention with good stain-resistance can also be made by the usual methods of paint making, that is, by adding the polymer latex only in the letdown portion of the paint.

Objects and advantages of the present invention are illustrated in the following examples.

EXAMPLES

Latex paints were prepared using a variety of styrene copolymers. Films prepared from these paints were compared to films prepared from commercially available paints. The films were evaluated for stain-resistance to a variety of stains.

Quantitative Stain Resistance Test:

Paint films were prepared by coating latex paints, using a 200 micrometer gap coater, on black Leneta scrub charts and allowing the coating to air dry for at least 72 hours before challenging with staining media.

The films were challenged with staining media and then, after one hour, scrubbed in a Gardner Abrasion Tester using a cellulose sponge and a non-abrasive detergent solution. The amount of stain remaining after 50 cycles was measured by a Minolta color reflectometer.

Three staining media were used: (1) oily carbon media, (2) concentrated red stain media containing FD & C Red Dye No. 40, and (3) French's™ yellow prepared mustard. Both liquids (1) and (2) were liberally applied to the paint films with a soft bristle brush such that flooding and pooling occurred. The mustard was applied by applying a ribbon of mustard across the paint film and spreading the mustard with a brush to make a stripe about 5 cm wide. All stains were allowed to stand on the paint films in a horizontal position for at least one hour, after which any excess stain media was blotted away with a soft, absorbent paper towel. The chart was placed in the scrub machine, with a gasketed guide frame placed over the paint film.

A cellulosic sponge was saturated with a 5.5% solution of Dawn™ detergent in distilled water and the sponge was then squeezed to remove the bulk of the solution; 20 ml of the detergent solution was then applied to the paint surface (and confined by the guide frame), and the scrub machine started. After 50 cycles, the scrubbing was stopped, and the chart rinsed thoroughly in water, drained, and dried with a paper towel.

After the scrub chart had been air dried for at least one hour, residual stain measurements were made using a Minolta CR200 chroma meter. This machine was standardized, using the manufacturer's instructions. A measurement of the unstained portion of the scrub chart was made using the $L*a*b*$ system of color measurement. A similar measurement was made of each residual stain. These measurements were used to calculate the residual stain, AE, using the following formula:

$$\Delta E = \sqrt{\left(L_b\text{-}L_s\right)^2 + \left(a_b\text{-}a_s\right)^2 + \left(b_b\text{-}b_s\right)^2}$$

where the subscript b refers to the unstained background and the subscript s refers to the stained area. This $\Delta E$ value is the distance in the $L*a*b*$ color space between the unstained area and the stained area. It is a good measurement of the difference in color as perceived by people. The smaller the $\Delta E$, the greater the stain-resistance of the film.

Preparation of Concentrated Red Stain Media:

For the concentrated red stain media ("CRS"), 8.0 g FD&C Red Dye No.40 and 40 g citric acid were dissolved in a liter of distilled water to make a dye concentrate. Separately, a thickener solution was prepared by mixing at high shear 25 g Cellosize™ ER15000 hydroxyethyl cellulose (Union Carbide) in 975 g cold distilled water; while stirring, the water mixture was heated to 60°C. When the thickener solution was clear and viscous, it was allowed to cool and debubble overnight. The staining media was made by mixing together 20 parts of the thickener solution, 80 parts of the dye concentrate, and 0.25 parts Tergitol™ 25-L-3 wetting agent (Union Carbide). The presence of the wetting agent and thickener allows the formation of a uniform stain.

Preparation of Oily Carbon Black:

For the Oily Carbon Black stain tests, a Waring blender, or other suitable high-shear mixing device, was charged with 60 parts mineral oil, 32 parts mineral spirits, and 8 parts Cabot Regal Black 320 (carbon black). The mixture was then blended for at least 15 minutes.

Mustard:

French's™ yellow prepared mustard was used as purchased.

Example 1

A latex paint was prepared by adding an initial charge of 100.0 grams Joncryl™ 537 polymer emulsion (46.0% solids), 18.5 g propylene glycol, and 1.5 g Drewplus™ L-475 defoamer to a double-walled, water-cooled grinding container. Cooling water flow was initiated to the container. A high shear stirrer (Dispermat CV) equipped with a 30 mm diameter impeller, spaced about 20 mm from the bottom of the container, was engaged to mix the initial charge, beginning at a speed of about 1,000 rpm. Four additional ingredients were added slowly to the mixture while stirring: 100.0 g TI-PURE™ R-900 titanium dioxide, 74.5 g Opacimite™ calcium carbonate, 52 g Novacite™ 1250 silica, and 5 g Attagel™ 40 clay. The speed of the impeller was slowly increased during the addition of these ingredients. After all seven ingredients were mixed together, the impeller speed was increased to about 13,000 rpm, and the high shear mixing continued for 30 minutes. The impeller speed was then decreased to about 2,000 rpm, and the following ingredients, collectively known as the "letdown" were added in order: 0.5 g Drewplus™ L-475 defoamer, 38.7 g Joncryl™ 537 polymer emulsion (46.0% solids), 146.8 g water, 16.6 g coalescing solvent (a mixture of 70 weight % Texanol™ Ester Alcohol and 30 weight % 2-[2-n-butoxyethoxy]ethanol, 4.5 g QR-708 Rheology Modifier, 2.68 g tint mix (1 part TINT-AYD™ pigment WD 2345 [32% pigment] and 10 parts water), 3.5 g Biocheck™ 240 biocide, and 0.75 g concentrated ammonium hydroxide solution. The resulting mixture was blended for 15 minutes after all the letdown ingredients were added. The resulting mixture was then placed in a closed container, and allowed to stand overnight. The calculated Pigment Volume Concentration was 54.5%.

## Example 2

Example 2 was prepared as in Example 1, except Neocryl™ XA-6037 polymer emulsion (adjusted to 46.0% solids with water) was used in place of the Joncryl™ 537 polymer emulsion.

## Example 3

Example 3 was prepared as in Example 1, except Carboset™ XPD-1468 polymer emulsion was used in place of Joncryl™ 537 polymer emulsion.

The paints of Examples 1, 2 and 3 each had a calculated PVC of 54.5%. Films of these paints were prepared and tested as described above in the Quantitative Stain Resistant test method. The $\Delta E$ of the 3 stains were added together for each film and reported in Table 1 as "Total $\Delta E$". Films from several commercially available interior flat latex paints, and interior semi-gloss latex paints were prepared and tested as for Examples 1-3. The results for the commercially available paints are summarized in Table 1.

TABLE 1

| Paint Used to Prepare Film | Residual Stain After Cleaning ($\Delta E$) | | | Total $\Delta E$ |
|---|---|---|---|---|
| | Oily Carbon | CRS | Mustard | |
| Example 1 | 1.9 | 0.7 | 7.7 | 10.3 |
| Example 2 | 1.8 | 0.4 | 5.4 | 7.6 |
| Example 3 | 1.4 | 2.2 | 7.1 | 10.7 |
| Commercial interior flat latex paints (range) (median) | 6.0-23.0 16 | 13.5-27.0 20 | 8.4-39 30 | 66 |
| Commercial interior semi-gloss paints (range) (median) | 1.2-20.0 2 | 16-34 25 | 14-46 33 | 60 |

The data in Table 1 show the outstanding stain resistance of the paints of this invention compared to commercial flat latex, and even commercial semi-gloss latex paints. The paints of Examples 1 to 3 were all flat paints. The flat paints of this invention can produce films which are more resistant to staining, and are easier to clean, than films from commercially available flat latex paints, and even commercial semi-gloss paints.

## Example 4

Example 4 was prepared as in Example 1 except with a PVC of 52%, and with the following quantity adjustments: the grind charge was 120.0 grams Joncryl™ 537 polymer emulsion, 18.5 g propylene glycol, 1.5 g Drewplus™L-475 defoamer, 100 g TI-PURE™ R-900 titanium dioxide, 63.5 g Opacimite™ calcium carbonate, 44.5 g Novacite™ 1250 silica, and 5.0 g Attagel™ 40 clay. The letdown consisted of 0.5 g Drewplus™L-475 defoamer, 38.72 g Joncryl™ 537 polymer emulsion, 153.8 g water, 16.6 g of the coalescing solvent, 4.0 g Acrysol™ QR-708 associative thickener, 2.68 g of the tint mix, 3.5 g Biocheck™ 240 biocide, and 1.25 g concentrated ammonium hydroxide.

Film was prepared and tested as for Example 1, with the exception that the stains were allowed to remain in contact with the paint film for 24 hours before removing, and that the stains were scrubbed by hand with a sponge instead of using the Gardner machine. The $\Delta E$ values were 0.51 for oily carbon, 0.56 for CRS, and 5.13 for mustard. The $\Delta E$ values for the three stains were then totaled to give the results in Table 2. The total $\Delta E$ results for films of Example 1 and commercial flat latex paint are shown again in Table 2 for comparison.

TABLE 2

| Paint Sample | Total ΔE for Three Stains |
|---|---|
| Paint of Example 4 (52.0 % PVC) | 6.2 |
| Paint of Example 1 (54.5 % PVC) | 10.3 |
| Commercial Flat Latex Paint | 66.6 |

The data in Table 2 show that the paint of Example 4 with a PVC of 52% had better overall stain resistance than the paint of Example 1 with a PVC of 54.5%. Both Example 4 and Example 1 were significantly more stain resistant than the commercial flat latex paint.

Example 5

In Example 5, paint was made as in Example 4, except Neocryl™ XA-6037 polymer emulsion was adjusted to 46% solids by addition of deionized water, and used instead of Joncryl™ 537 polymer emulsion. Paint films were then prepared and tested as for Example 1. In addition, films were also tested for gloss using the above cited ASTM method, Contrast Ratio as defined in ASTM method D 2805-70 using a Minolta Colormeter Model CR200, and Stomer Viscosity using ASTM method D562-55. The results are shown in Table 3.

The contrast ratio, gloss, and viscosity of Example 4 were determined as in Example 5. The total ΔE of Example 4 is shown again for comparison. The results are shown in Table 3.

TABLE 3

| | Example 4 | Example 5 |
|---|---|---|
| Contrast Ratio: (100μm film) | 0.95 | 0.97 |
| Gloss 60°/85° | 4.7/7.3 | 5.8/10.8 |
| Stain Resistance (Total ΔE) | 6.2 | 7.14 |
| Stormer Viscosity of paint | 100 KU | 109 KU |

Example 6

A paint was prepared as in Example 1 except by grinding 72.0 g propylene glycol, 6.9 g Tamol™ 963 wetting agent, 2.0 g Drewplus™ L-475 defoamer, and 243.4 g TI-PURE™ 901 titanium dioxide. Grinding was continued for about 30 minutes. Letdown ingredients in order of addition, were 77.1 g Ropaque™ 0P-62 polymer pigment, 374.0 g Rhoplex™ AC-2000 polymer emulsion, 22.9 g Texanol™ coalescing solvent, 1.0 g Drewplus™ L-475 defoamer, 3.0 g concentrated ammonium hydroxide solution, 187.1 g deionized water, and 25.7 g Acrysol™ RM-5 thickener premixed with 25.7 g water. AC-Rhoplex™ 2000 polymer emulsion is a styrene-acrylate copolymer emulsion, but does not contains interpolymerized units derived from 2-ethylhexyl acrylate.

The resulting paint had a calculated PVC of 34.7%, a pH of 8.5-9.0, and a viscosity of 76-78 KU.

Example 7

A paint was prepared as in Example 1 except by grinding 72.0 g propylene glycol, 6.9 g Tamol™ 963 wetting agent, 2.0 g Drewplus™ L-475 defoamer, and 243.4 g CR-800 HM-3 titanium dioxide. After grinding for about 30 minutes, the following letdown ingredients were added in order: 77.1 g Ropaque™ 0P-62 polymer pigment, 374.0 g Ucar™ 6664 polymer emulsion, 1.0 g Drewplus™ L-475 defoamer, 187.1 g deionized water, 100 g Siponat™ D-17 silica, 25.7 g Acrysol™ RM-5 thickener premixed with 25.7 g water, and 22.9 g Texanol™ coalescer. This paint represents another example of using a styrene/acrylate polymer emulsion which does not contain interpolymerized units derived from 2-ethylhexyl acrylate.

Films of a commercial semi-gloss paint and the paints of Examples 4, 6, and 7 were prepared as in Example 1 and allowed to dry for one week. Oily carbon, concentrated red stain, and prepared yellow mustard media were applied to the dried films and allowed to stand on the films for 1 hour, after which the films were machine scrubbed for 50 cycles with a brush and 5.5% Dawn™ detergent solution. The stains were then visually rated on a scale from 0 to 10, with 0 representing complete removal of stain, and 10 representing no removal of stain, the stain resistance performance is shown in Table 4.

TABLE 4

|  | Oil Carbon | CRS | Mustard |
|---|---|---|---|
| Example 6 | 0 | 5 | 5 |
| Example 7 | 2 | 5 | 2 |
| Example 4 | 0.5 | 0 | 1 |
| Commercial Semi-Gloss | 3 | 8 | 9 |

The data in Table 4 show that particular preferred polymers are those derived from 2-ethylhexyl acrylate. The polymer emulsions used in Examples 6, 7 and 4 are all styrene-acrylates with similar Tg's, but only the polymer of Example 4 was prepared from monomer mixtures containing 2-ethylhexyl acrylate. While the paints of Examples 6 and 7 show improved stain resistance compared to a commercial semi-gloss paint, their performance is not as good as the paint of Example 4.

Examples 8-17 and Comparative Examples C1-C7

Paints were prepared as in Example 1, using a variety of polymer emulsions. All paints had a calculated PVC of 52.0%, and all components were held constant except for the polymer emulsion. The polymer emulsions used were copolymers of styrene, methyl styrene, 2-ethylhexyl acrylate, and methyl methacrylate, but the ratios of these monomers vary, and therefore the polymers have varying glass transition temperatures (Tg).

As in Example 1, the following materials were ground under high shear: 36.0 g deionized water, 3.0 g Tamol™ 963 wetting agent, 18.5 g propylene glycol, 1.5 g Drewplus™ L-475 defoamer, 100.0 g TI-PURE™ R-900 titanium dioxide, 57.0 g Opacimite™ calcium carbonate, 50.0 g Novacite™ 1250 silica, and 5.0 g Attagel™ 40 clay. After grinding for about 30 minutes, letdown ingredients were added as follows: an amount of polymer emulsion calculated to give 73.0 g polymer solids, an amount of water calculated to give a total of 239.5 g water including water from the polymer emulsion, 0.75 g concentrated ammonium hydroxide solution, 0.5 g Drewplus™ L-475 defoamer, 16.6 g coalescing solvent mixture used in Example 1, 4.0 g Acrysol™ QR-708 thickener, and 3.5 g Biocheck™ 240 biocide.

Paint films were cast using a 200 micrometer gap coater, and were allowed to dry for seven days. The films were then challenged for one hour with stain media, and excess media was then blotted away. The charts were then scrubbed vigorously by hand for 15 strokes (forward and return), using a damp cellulose sponge and neat Dawn™ detergent. After rinsing with water, and air drying, the residual stains were measured with a Minolta Colormeter, using unstained backgrounds as the zero reference point. Tg's and stain resistance are presented in Table 5.

TABLE 5

| Film of Example | Polymer Emulsion | Tg (°C) | Stain Resistance ($\Delta$E) | | |
|---|---|---|---|---|---|
|  |  |  | Oily Carbon | CRS | Mustard |
| C1 | Joncryl™ 74 | -16 | 35.3 | 14.1 | 23.2 |
| C2 | Joncryl™ 77 | 21 | 21.8 | 1.3 | 15.8 |
| 8 | Neocryl™ A625 | 30 | 3.4 | 7.5 | 6.1 |
| 9 | Neocryl™ A655 | 30 | 2.4 | 7.8 | 7.2 |
| 10 | Joncryl™ 554 | 37 | 23.6 | 0.6 | 10.9 |
| 11 | Joncryl™ 537 | 44 | 0.5 | 0.4 | 5.1 |
| 12 | Joncryl™ 97 | 45 | 3.1 | 1.1 | 6.0 |
| 13 | Neocryl™ XA-6037 | 45 | 1.1 | 0.3 | 5.8 |
| 14 | Joncryl™ 138 | 55 | 0.8 | 8.4 | 12.4 |
| 15 | Joncryl™ 130 | 62 | 0.8 | 3.7 | 1.6 |
| 16 | Joncryl™ 538 | 64 | 0.9 | 2.0 | 4.1 |
| 17 | Joncryl™ 530 | 75 | 13.7 | 10.3 | 3.6 |
| C3 | Joncryl™ 134 | 95 | 4.1 | 24.0 | 16.5 |

TABLE 5   (continued)

| Film of Example | Polymer Emulsion | Tg (°C) | Stain Resistance (ΔE) | | |
|---|---|---|---|---|---|
| | | | Oily Carbon | CRS | Mustard |
| C4 | Joncryl™SCX-619 | 97 | 5.3 | 21.0 | 18.5 |
| C5 | Joncryl™SCX-618 | 98 | 2.9 | 12.7 | 21.1 |
| C6 | Joncryl™ 89 | 98 | 10.8 | 12.6 | 14.9 |
| C7 | Joncryl™ 87 | 100 | 6.5 | 16.0 | 13.4 |

The data in Table 5 show that the best stain resistance (smallest ΔE values) was obtained from paints made with copolymers having a glass transition temperature (Tg) between 21°C and 95°C.

**Claims**

1. A latex paint comprising

   (A) polymer having a glass-transition temperature between 21°C and 95°C, whose interpolymerized units comprise at least 40 mole percent of units derived from styrene, methyl styrene, or both, and at least 10 mole percent of units derived from one or more acrylates, methacrylates, acrylonitrile, or combinations thereof:
   (B) hiding pigment; and
   (C) non-cellulosic thickener; wherein said paint has a pigment volume concentration of at least 20% and less than its critical pigment volume concentration.

2. The paint of Claim 1 wherein said interpolymerized units consist essentially of units derived from 2 or more monomers selected from styrene, methylstyrene, acrylates, methacrylates, and acrylonitrile, and wherein said acrylates and methacrylates contain from 4 to 16 carbon atoms.

3. The paint of Claim 1 wherein said interpolymerized units comprise units derived from 2-ethylhexyl acrylate.

4. The paint of Claim 1 wherein said interpolymerized units comprise: from 50 to 70 mole % of units derived from styrene, methyl styrene, or both; from 10 to 30 mole % of units derived 2-ethylhexyl acrylate; and from 10 to 30 mole % of units derived from methyl methacrylate, acrylonitrile, or both.

5. The paint of Claim 1 wherein said thickener is a polyurethane associative-type thickener.

6. The paint of Claim 1 wherein said paint has a pigment volume concentration of less than 55% and greater than 45%.

7. An article wherein a portion of at least one surface of said article is coated with a stain-resistant latex paint according to any one of claims 1 to 6.

**Patentansprüche**

1. Latex-Anstrichstoff, umfassend

   (A) ein Polymer mit einer Glasübergangstemperatur zwischen 21°C und 95°C, dessen copolymerisierte Einheiten wenigstens 40 Mol-% von Styrol, Methylstyrol oder beiden abgeleitete Einheiten und wenigstens 10 Mol-% von einem oder mehreren Acrylaten, Methacrylaten, Acrylnitril oder Kombinationen davon abgeleitete Einheiten umfassen;
   (B) ein deckendes Pigment; und
   (C) ein cellulosefreies Verdickungsmittel,

   wobei der Anstrichstoff eine Pigmentvolumenkonzentration von wenigstens 20 % und weniger als seine kritische Pigmentvolumenkonzentration aufweist.

2. Anstrichstoff gemäß Anspruch 1, wobei die copolymerisierten Einheiten im wesentlichen aus Einheiten bestehen, die von zwei oder mehreren, aus Styrol, Methylstyrol, Acrylaten, Methacrylaten und Acrylnitril ausgewählten Monomeren abgeleitet sind und wobei die Acrylate und Methacrylate 4 bis 16 Kohlenstoffatome enthalten.

3. Anstrichstoff gemäß Anspruch 1, wobei die copolymerisierten Einheiten von Acrylsäure-2-ethylhexylester abgeleitete Einheiten umfassen.

4. Anstrichstoff gemäß Anspruch 1, wobei die copolymerisierten Einheiten 50 bis 70 Mol-% von Styrol, Methylstyrol oder beiden abgeleitete Einheiten, 10 bis 30 Mol-% von Acrylsäure-2-ethylhexylester abgeleitete Einheiten und 10 bis 30 Mol-% von Methacrylsäuremethylester, Acrylnitril oder beiden abgeleitete Einheiten, umfassen.

5. Anstrichstoff gemäß Anspruch 1, wobei das Verdickungsmittel ein Polyurethanverdickungsmittel vom Assoziationstyp ist.

6. Anstrichstoff gemäß Anspruch 1, wobei der Anstrichstoff eine Pigmentvolumenkonzentration von weniger als 55 % und größer als 45 % aufweist.

7. Gegenstand, wobei ein Teil wenigstens einer Oberfläche des Gegenstandes mit einem schmutzabweisenden Latex-Anstrichstoff gemäß einem der Ansprüche 1 bis 6 beschichtet ist.

**Revendications**

1. Une peinture en latex comprenant

(A) un polymère ayant une température de transition du second ordre de 21° C à 95° C et dont les motifs interpolymérisés comprennent au moins 40 mol % de motifs dérivés du styrène, du méthylstyrène ou des deux, et au moins 10 mol % de motifs dérivés d'un ou plusieurs monomères choisis parmi les acrylates, les méthacrylates, l'acrylonitrile et leurs combinaisons ;
(B) un pigment couvrant ; et
(C) un agent épaississant non-cellulosique ; ladite peinture ayant une concentration du pigment en volume d'au moins 20 % mais inférieure à la concentration critique de pigment en volume.

2. La peinture de la revendication 1, dans laquelle lesdits motifs interpolymérisés consistent essentiellement en motifs dérivant de deux ou plusieurs monomères choisis parmi le styrène, le méthylstyrène, les acrylates, les méthacrylates et l'acrylonitrile, les acrylates et méthacrylates en question contenant de 4 à 16 atomes de carbone.

3. La peinture de la revendication 1, dans laquelle les motifs interpolymérisés comprennent des motifs dérivant de l'acrylate de 2-éthylhexyle.

4. La peinture de la revendication 1, dans laquelle lesdits motifs interpolymérisés comprennent : de 50 à 70 mol % de motifs dérivant du styrène, du méthylstyrène ou des deux ; de 10 à 30 mol % de motifs dérivant de l'acrylate de 2-éthylhexyle ; et de 10 à 30 mol % de motifs dérivant du méthacrylate de méthyle, de l'acrylonitrile ou des deux.

5. La peinture de la revendication 1, dans laquelle l'agent épaississant est un agent épaississant de type associatif de nature polyuréthanne.

6. La peinture de la revendication 1, ayant une concentration en volume de pigment inférieure à 55 % et supérieure à 45 %.

7. Un article portant, sur une partie d'au moins une de ses surfaces, un revêtement d'une peinture en latex résistant aux salissures selon l'une quelconque des revendications 1 à 6.